# EUROPEAN PATENT SPECIFICATION

(11) **EP 0 664 893 B1**
(45) Date of publication and mention of the grant of the patent: **09.06.1999**
(21) Application number: 93922374.9
(22) Date of filing: 24.09.1993
(51) Int. Cl.: G02B 5/08, G02B 5/26, G02B 1/04

(54) **COLD MIRROR**
SPIEGEL FÜR KALTLICHT
MIROIR A LUMIERE FROIDE

(30) Priority: 16.10.1992 US 963305
(43) Date of publication of application: 02.08.1995
(73) Proprietor: MINNESOTA MINING AND MANUFACTURING COMPANY, St. Paul, Minnesota 55133-3427 (US)
(72) Inventor: WHEATLEY, John, Allen, Midland, MI 48640 (US); MOTTER, Gregg, Allen, Midland, MI 49640 (US)
(74) Representative: Burford, Anthony Frederick
(86) International application number: PCT/US93/09095
(87) International publication number: WO 94/09392

(56) References cited:
- EP-A- 0 404 463
- EP-A- 0 469 732
- EP-A- 0 491 551
- EP-A- 0 514 223
- WO-A-93/16878
- US-A- 3 711 176
- US-A- 4 310 584
- RESEARCH DISCLOSURE vol. 351, no. 011 , July 1993 , EMSWORTH ,GB , XP387237 'films'

## Description

This invention relates to a cold mirror, and more particularly to a cold mirror which reflects light in the visible wavelength region while transmitting a substantial portion of light in the infrared wavelength region, and which can be designed either to reflect, transmit, or absorb light in the ultraviolet region of the spectrum.

In the production of lighting systems for medical treatment, window displays, theatrical lighting, and other applications, a problem exists from the harmful effects of infrared or ultraviolet light on illuminated objects. Light sources which emit infrared radiation can cause heating of illuminated objects, which is often undesirable and damaging. For example, certain jewels such as rubies and pearls have a substantial water content. Such jewels lose their luster if moisture is lost because of infrared heating from lights used to illuminate the jewels.

Light sources which emit ultraviolet radiation can also be damaging to illuminated objects. For example, it has been found that ultraviolet radiation is a contributing factor to the fading of colors in oil paintings and tapestries displayed in museums and galleries. General merchandise displays in retail outlets may also be subject to damage from ultraviolet radiation. Further, the combination of ultraviolet and infrared radiation from light sources may cause even more rapid degradation of illuminated objects.

To combat this problem, cold mirrors, also referred to as cold light mirrors, have been developed which reflect, visible wavelengths of light, but transmit longer-wave infrared or shorter-wave ultraviolet radiation. The cold mirrors are arranged so that visible light from a light source is reflected onto an object to be illuminated, while infrared radiation is transmitted through the mirror and away from the object. This minimizes heating and potential damage to the illuminated objects. Cold mirrors are currently widely used in lamps for projectors, for lighting in studios and theaters, art displays, shop windows, and in security and medical applications.

Typically, cold mirrors comprise an uneven number of absorption-free layers of high and low refracting dielectric materials applied alternately to a glass substrate. Zinc sulfide and magnesium fluoride are two commonly-used dielectric materials as well as titanium oxide and silicon dioxide. A typical method of production of such cold mirrors is high vacuum deposition.

For example, GB-A-1,262,163 teaches a cold mirror used in cinema projectors which is formed by the vacuum deposition of interference layers on a glass substrate. The substrate is permeable to heat radiation and comprises varying alternating layers of silicon, silicon oxide, and magnesium fluoride and titanium oxide.

An alternative to glass has been the use of a metal substrate as taught in McLintic, US-A-3,944,320, which teaches a cold mirror comprising a metal substrate coated with first and second pigmented vitreous coatings and a dielectric interference coating. However, the mirror requires the addition of a black vitreous enamel which is capable of absorbing infrared radiation as the metal will reflect infrared radiation.

Doctoroff et al., US-A-3,645,601 also teaches a reflector comprising an aluminum substrate including a dielectric interference coating which reflects visible wavelengths of light and absorbs or diffuses at infrared wavelengths.

However, a major disadvantage of prior art cold mirrors is that they require deposition of dielectric materials in multiple separate processing steps using relatively expensive and time consuming vacuum deposition techniques. In addition, special care must be exercised to ensure uniformity of film thickness over the entire surface of each individual substrate. Also, once deposited, the coatings and the substrates to which they are adhered cannot be further shaped or formed. Further, the coatings are subject to chipping, scratching, and/or corrosion and must be protected. All of these factors add to the expense of production. The need to deposit the layers on a glass substrate increases the thickness and weight of the final product. Because vacuum deposition techniques must be used, it is difficult and expensive to fabricate coatings which cover large surface areas; consequently, because of that difficulty and expense, many cold mirrors are relatively small. Finally, vacuum deposition cannot be used with parts having certain geometries; for example, the interior of a tube or deep cavity cannot be coated using standard vacuum deposition techniques.

Another type of cold mirror utilizes dichroic (multilayer interference film) coatings which are typically utilized on the reflectors of tungsten or halogen lamps. Such dichroic cold mirrors comprise a glass surface coated with a metal film that reflects visible light while transmitting infrared as well as absorbing ultraviolet light. For example, Levin et al. US-A-4,604,680 teaches an infrared floodlight for security applications which uses a tungsten halogen light source and dichroic hot and cold mirrors comprising a glass substrate having multiple layers of titanium dioxide and silicon dioxide coated thereon for directing infrared radiation toward the assembly's lens. Such dichroic reflectors have been widely used in halogen lamps for museum displays to prevent degradation of works of art from prolonged exposure to ultraviolet radiation.

Lawson, US-A-4,380,794, teaches a cold mirror for surgical applications comprising a high-temperature resistant polyetherimide which has vacuum-deposited thereon a dichroic coating. The high-temperature resistant polymer is used so that it will be able to withstand temperatures encountered during vacuum deposition of the dichroic coating.

Other halogen lamps produce a cooler light by a visibly transmissive, infrared reflective coating for the inner filament tube that reflects infrared radiation back toward the filament. The infrared radiation is used to maintain filament temperature and produce more visible light. However, such lamps are very expensive to produce.

Multilayer polymeric reflective films are known. Alfrey, Jr. et al., US-A-3,711,176, teaches a multilayered highly reflective thermoplastic body fabricated using thin film techniques. That is, the reflective thin film layers, made from two or more diverse thermoplastic materials, of Alfrey, Jr. relied on the constructive interference of light to produce reflected visible, ultraviolet, or infrared portions of the electromagnetic spectrum. Such reflective thin films have found use in decorative items because of the iridescent reflective qualities of the film.

Other polymeric multilayer reflective bodies, made from at least two diverse polymeric materials are also taught in the art, as described in Wheatley et al., US-A-5,122,905 and Wheatley, US-A-5,122,906 (corresponding to EP-A-0404463), and Wheatley et al., US-A-5,126,880 (corresponding to EP-A-0491551). However, these reflective bodies are designed to be uniformly reflective over substantially the entire visible range as well as reflecting in the infrared range.

Accordingly, the need still exists in the art for cold mirrors which are inexpensive and easy to produce, and which reflect visible wavelengths of light while transmitting infrared wavelengths. The need also exists for cold mirrors which can be formed and/or bent into complex shapes, cold mirrors which are free-standing and require no glass or metal substrate for support, and cold mirrors which can be laminated to a variety of other substrates. The need also exists for cold mirrors which can be designed to reflect or absorb at ultraviolet wavelengths.

The present invention meets that need by providing a cold mirror which is much lower in cost to produce than previously used cold mirrors, and which may be formed as a film laminated to a polymeric or nonpolymeric substrate. Further, the cold mirrors of the present invention may be formed, shaped, or bent into a variety of complex shapes. By "polymeric cold mirror," we mean a body comprising multiple layers of diverse polymers which reflects a substantial portion of visible light impinging on the mirror while transmitting a substantial portion of infrared light.

The terms "reflective", "reflectivity", "reflection", and "reflectance" as used herein refer to total reflectance (that is, ratio of reflected wave energy to incident wave energy) of a sufficiently specular nature such that the polymeric body has a metallic appearance. The use of these terms is intended to encompass semi-specular or diffuse reflection as well. For example, one or both surfaces of the cold mirror may be embossed or textured to diffuse light which is reflected or transmitted by the mirror. In general, reflectance measurement refers to reflectance of light rays into an emergent cone with a vertex angle of 15 degrees centered around the specular angle. By the term "diverse" we mean that the polymeric materials need not differ in any respect except in terms of refractive index. Thus, while adjacent layers may be chemically diverse, if such materials have the same refractive index, then for purposes of the present invention they are not "diverse".

A specific intensity of reflectance or transmission, when used herein, refers to wavelengths where no substantial absorption occurs. For example, in a preferred embodiment of the invention, the cold mirror is designed to reflect visible light having wavelengths in the range from 380 to 680 nm. Light of other wavelengths, such as in the infrared range, pass through (that is, are transmitted by) the mirror. It is at the visible wavelengths to which the intensity of reflection is referring.

According to the present invention, a cold mirror comprises a multiplicity of all-polymeric mirror platelets on a substrate, each platelet being formed of at least first and second refractive index diverse polymeric materials with alternating layers of the first and second polymeric materials in repeating units in which the sum of the optical thicknesses in a substantial majority of said units is between 190 nm and 391 nm, there being a sufficient number of repeating units that at least 50 percent of peak reflecting visible light of a wavelength of between 380 to 680 nm incident on each of said platelets is reflected and at least 50 percent of infrared light between 680 to 2000 nm is transmitted or absorbed. By peak reflecting visible light, we mean the wavelength in the visible range at which there is the greatest reflectance.

In one embodiment of the invention, at least 50 percent of ultraviolet light of a wavelength between 300 to 380 nm incident on the platelets is also reflected. In an alternative embodiment of the invention, at least 50 percent of ultraviolet light of a wavelength between 300 to 380 nm incident on the platelets is absorbed. Various means for absorbing the ultraviolet radiation may be used. Many commercially available polymers already contain UV absorbing additives. Further, in this latter embodiment, an ultraviolet absorbing dye or pigment may be provided in either an exterior layer or one or more interior layers. Such dyes or pigments may impart a metallic appearance to the mirror such as bronze, copper, gold, or other colors. Alternatively, reflections from the cold mirror ultraviolet wavelengths may be suppressed by the use of layer thickness and refractive index combinations which selectively suppress reflections at those wavelengths.

Additionally, other layer thickness and refractive index combinations may be used to suppress reflections at certain visible wavelengths to design a more colorful cold mirror which renders certain spectral characteristics to the reflected and/or transmitted light. An advantage of the present invention is that the multilayer platelets may be constructed to correct for wavelength deficiencies in the light source. Thus, the cold mirror and light source combination may be tuned to produce desired reflective characteristics. For example, a jeweler may wish to exhibit certain jewels in a blue light to enhance their brilliance. Further, color rendering may be used to enhance or render the color of an object true to daylight such as a dentist capping a patient's teeth or a surgeon viewing the color of an organ during surgery to determine whether that organ is healthy or diseased.

A substantial majority of the individual layers of the platelets have optical thicknesses in the range where the sum of the optical thicknesses in a repeating unit (such as AB for a two component mirror) are in the range of from 190 nm to 340 nm. In a preferred embodiment of the invention, for two component platelets having a repeat unit AB, the first and second polymeric materials differ from each other in refractive index by at least 0.03 in the wavelength range of from 380 to 680 nm, and the ratio of optical thicknesses of the two polymer components, the "f-ratio" is 1/2 to suppress second order reflections from the platelets.

In another embodiment of the invention, at least 80 percent of infrared light of wavelengths of between 680 to 2000 nm incident on the platelets is transmitted.

A number of substantially transparent polymers are suitable for use in the present invention. In a preferred embodiment of the invention, the first polymeric material comprises polystyrene and the second polymeric material comprises polyethylene. Generally, the individual polymers chosen for use in the cold mirror must be substantially transparent to wavelengths in the infrared spectrum (680 to 2000 nm). While at least two optically dissimilar polymers may be used, multicomponent structures of three or more diverse polymers are within the scope of the invention.

In certain embodiments of the invention, it is desirable to produce the polymeric platelets to comprise at least 200 layers. Increasing the number of layers in the polymeric platelets has been found to increase its reflectivity (that is, the percentage of incident light reflected from the mirror). Thus, by controlling the number of layers, the degree of reflectivity of the platelets may be controlled. To increase the reflectance of the platelets even further, the number of layers may be increased to in excess of a thousand layers. Reflectance values of greater than 80 percent for the visible portion of the spectrum between 380 to 680 nm are well within the scope of the invention. However, care must be taken that the overall thickness of the platelets does not become too great, as thicker platelets may absorb more light. Total platelets thicknesses of between 0.025 mm to 6.35 mm (1.0 to 250 mil) are within the scope of the invention, with thicknesses of between 0.635 mm to 3.18 mm (25 to 125 mil) being preferred.

In one embodiment of the invention a cold mirror sheet or film is cut into small pieces (platelets) and mixed with a liquid vehicle to form a coatable dispersion. Thus, a cold mirror is formed on any substrate by simply coating the dispersion onto the substrate. Alternatively, the cold mirror may be formed from a multiplicity of mirror platelets which are embossed into the surface of a substrate, such as, for example, through the use of embossing rolls while a polymeric substrate is heated and softened.

The mirror may also be formed from a multiplicity of mirror platelets which are spread onto the surface of an adhesive substrate and secured thereto. The mirror may also be formed from a multiplicity of mirror platelets which are spread onto the surface of a substrate and then laminating a transparent sheet over the mirror platelets.

In the invention, the polymeric mirror platelets include first and second diverse polymeric materials of alternating layers in a repeating unit AB. The polymeric cold mirror may also include a protective skin layer on at least one major surface thereof. The skin layer may be sacrificial, or may be permanent and serve as a scratch resistant or weatherable protective layer. For example, a skin layer may be applied as a sprayed on coating which would act to level the surface of the mirror to improve optical properties and impart scratch resistance, chemical resistance and/or weatherability. The skin layer may also be laminated to the multilayered polymeric mirror. Lamination is desirable for those polymers which are not readily extrudable.

Objects and advantages of the present invention will become apparent from the following detailed description, the accompanying drawings, and the appended claims.
Fig. 1 is a schematic cross section of a two component polymeric cold mirror film for the present invention including protective skin layers on both exterior surfaces thereof;
Fig. 2 is a graph of wavelength versus transmission for a polymeric cold mirror film for use in the present invention; and
Fig. 3 is another graph of wavelength versus transmission for a polymeric cold mirror film for use in the present invention.

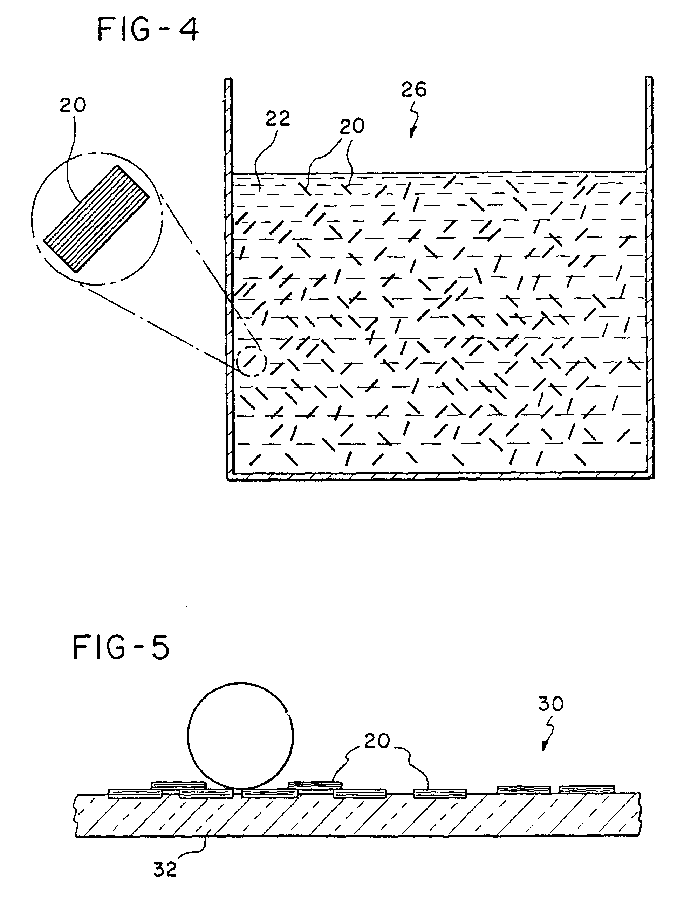

Figs. 4 and 5 illustrate embodiments of the cold mirrors of the invention.

The optical theory of multiple reflections from layers having differing refractive indices demonstrates the dependency of the effect on both individual layer thickness and refractive index of the material, as shown in Radford et al., "Reflectivity of Iridescent Coextruded Multilayered Plastic Films", Polymer Engineering and Science, 13, 3, p. 216 (1973). The primary or first order reflected wavelength for a two component all-polymeric platelet for normal incidence is given by the equation below.${\text{λ}}_{\text{I}} {\text{=2(n}}_{\text{1}} {\text{d}}_{\text{1}} {\text{+ n}}_{\text{2}} {\text{d}}_{\text{2}} \text{)}$ where λ_{I} is the wavelength of first order reflection in nanometers, and spans a part or all of the range of 380 to 680 nm, n₁ and n₂ are the refractive indices of the two polymers, and d₁ and d₂ are the layer thicknesses of the two polymers, also in nanometers. If d₁=d₂, then the sum of the optical thicknesses in a repeat unit varies within the range of from 190 nm to 340 nm.

As can be seen, the first order reflected wavelength is proportional to the sum of the optical thicknesses of the two polymers (where optical thickness, n₁d₁, is the product of layer thickness times refractive index). In addition to the first order reflections, higher order reflections occur at integer fractions of the first order. The relative intensity of these higher order reflections depends on the ratio of the optical thickness of the polymer components. A specific ratio of optical thicknesses, the f-ratio, may be chosen to suppress selected higher order reflections, where the optical thickness ratio, fᵢ, is defined as: 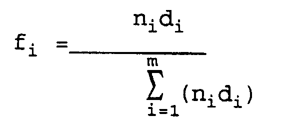 and m is the number of layers in the optical repeat unit, nᵢ is the refractive index of polymers i, and dᵢ is the layer thickness of polymers i.

To produce a polymeric platelet which reflects a broad bandwidth of wavelengths in the range of from 380 to 680 nm, a layer thickness gradient may be introduced across the thickness of the platelet. Thus, in one embodiment, the layer thicknesses will increase monotonically across the thickness of the platelet. By monotonically, it is meant that the layer thicknesses increase at a predetermined rate across the thickness of the platelet, as shown in Schrenk, US-A-3,687,589. As can be seen from the above equations, variations in individual layer thickness, d, have a direct effect on the optical properties of the platelet.

The layer optical thicknesses needed for reflecting in the 380 to 680 nm range described above have all been described for reflectance of light at normal incidence (that is, 0°) on the platelet. The reflected wavelength varies with the angle of incidence of light. As the angle of incidence varies from 0° (normal incidence) to 45°, the shift is about 55 nm. Thus, a cold mirror in accordance with the present invention could be designed for a particular angle of incidence to shift reflected wavelengths into a desired range such as the visible range.

To accommodate the wavelength shift and the probability that not all light will strike the platelets at normal incidence, the layer optical thicknesses may be designed to accommodate this somewhat larger range of 380 nm to 782 nm. The maximum optical thicknesses of the layers in this design would increase 15 percent, so that the sum of optical thicknesses in a repeating unit are in the range of from 190 nm to 391 nm. Such a design would ensure that substantially all visible light impinging upon the platelet was reflected, even if the light were incident at an angle other than normal to the platelet.

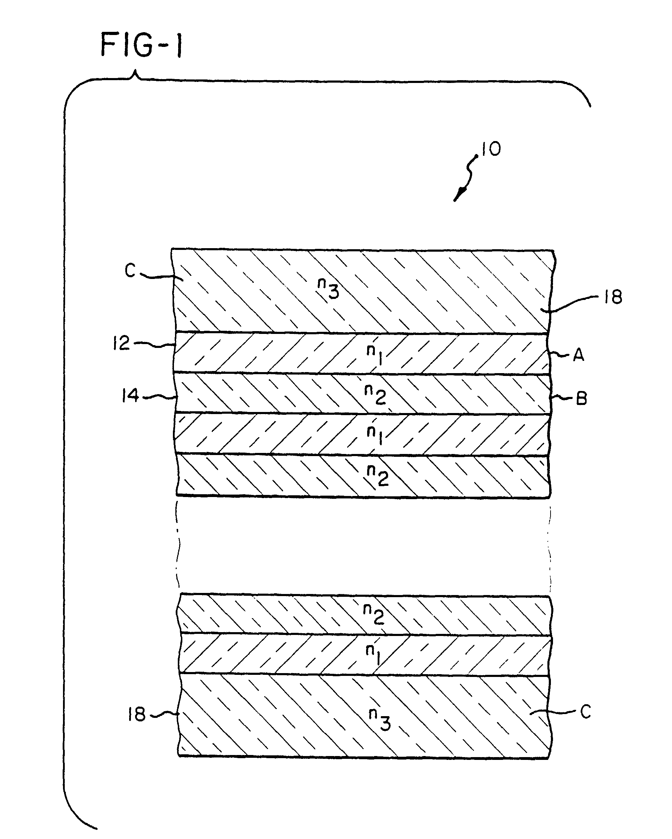

Fig. 1 schematically illustrates a two-component all-polymeric cold mirror film 10 having a repeating unit AB in accordance with the present invention. The mirror 10 includes alternating layers of a first polymer (A) 12 having a refractive index, n₁, and a second polymer (B) 14 having a refractive index, n₂. Fig. 1 shows a preferred form of the invention where substantially all of the layers of the mirror have optical thicknesses where the sum of the optical thicknesses of the repeat unit varies between 190 nm to 340 nm. Fig. 1 also depicts skin layers of a polymer (C) 18 positioned on both major exterior surfaces of the mirror to protect the other layers from scratches or weathering, to provide support for the other layers, or to act as adhesive layers for lamination to a supporting substrate. The skin layer polymer may be the same or different on each surface. Moreover, the refractive index, n₃, of the skin layer polymers may be the same as or different from the inner layers A and B.

Preferably, the polymers chosen have a refractive index mismatch of at least 0.03 at the wavelengths 380 to 680 nm. A preferred polymeric cold mirror includes polystyrene as the first polymeric material and polyethylene as the second polymeric material. Generally, the individual polymers must be substantially transparent to wavelengths in the near infrared spectrum (680 to 2000 nm).

When reflection of ultraviolet wavelengths is undesirable, it is preferable that an ultraviolet absorbing dye be present in one or both of the exterior skin layers or in one or more interior layers. The ultraviolet absorbing dye may also be present in a post-applied coating or layer. Many thermoplastic polymers have ultraviolet absorbing compounds incorporated therein to improve stability.

Alternatively, reflections occurring at ultraviolet wavelengths may be suppressed by the use of layer thickness and refractive index combinations which selectively suppress reflections at those wavelengths. Where transmission of ultraviolet wavelengths is desired, polymers which are inherently resistant to degradation by ultraviolet light are preferably used. Such polymers include polyvinylidene fluoride and polymethyl methacrylate, which are resistant to degradation by ultraviolet light as well as being nonabsorbers of ultraviolet light.

The reflective multilayered polymeric bodies of the present invention may comprise alternating layers of a wide variety of generally transparent thermoplastic materials. Suitable thermoplastic resins are listed in Wheatley et al., US-A-5,122,905. Those listed suitable thermoplastic resins, along with representative refractive indices, which may be used in the practice of the present invention include, but are not limited to: perfluoroalkoxy resins (refractive index = 1.35), polytetrafluoroethylene (1.35), fluorinated ethylene-propylene copolymers (1.34), silicone resins (1.41), polyvinylidene fluoride (1.42), polychlorotrifluoroethylene (1.42), epoxy resins (1.45), poly(butyl acrylate) (1.46), poly(4-methylpentene-1) (1.46), poly(vinyl acetate)(1.47), ethyl cellulose (1.47), polyformaldehyde (1.48), polyisobutyl methacrylate (1.48), polymethyl acrylate (1.48), polypropyl methacrylate (1.48), polyethyl methacrylate (1.48), polyether block amide (1.49), polymethyl methacrylate (1.49), cellulose acetate (1.49), cellulose propionate (1.49), cellulose acetate butyrate (1.49), cellulose nitrate (1.49), polyvinyl butyral (1.49), polypropylene (1.49), polybutylene (1.50), ionomeric resins such as Surlyn (trademark) (1.51), low density polyethylene (1.51), polyacrylonitrile (1.51), polyisobutylene (1.51), thermoplastic polyesters such as Ecdel (trademark) (1.52), natural rubber (1.52), perbunan (1.52), polybutadiene (1.52), nylon (1.53), polyacrylic imides (1.53), poly(vinyl chloro acetate) (1.54), polyvinyl chloride (1.54), high density polyethylene (1.54), copolymers of methyl methacrylate and styrene such as Zerlon (trademark) (1.54), transparent acrylonitrile-butadiene-styrene terpolymer (1.54), allyl diglycol resin (1.55), blends of polyvinylidene chloride and polyvinyl chloride such as Saran resins (trademark) (1.55), polyalpha-methyl styrene (1.56), styrene-butadiene latexes such as Dow 512-K (trademark) (1.56), polyurethane (1.56), neoprene (1.56), copolymers of styrene and acrylonitrile such as Tyril resin (trademark) (1.57), copolymers of styrene and butadiene (1.57), polycarbonate (1.59), other thermoplastic polyesters such as polyethylene terephthalate and polyethylene terephthalate glycol (1.60), polystyrene (1.60), polyimide (1.61), polyvinylidene chloride (1.61), polydichlorostyrene (1.62), polysulfone (1.63), polyether sulfone (1.65), and polyetherimide (1.66). The refractive indices reported above may vary somewhat at different wavelengths. For example, the refractive index of polycarbonate is somewhat greater for light in the blue region of the spectrum and somewhat lower for light in the red region of the spectrum. Copolymers of the above resins are also useful such as ethylene and vinyl alcohol, styrene and hydroxy ethylacrylate, styrene and maleic anhydride, styrene-butadiene block copolymers, styrene and methylmethacrylate, and styrene and acrylic acid. Other useful polymeric materials include polyetheretherketones, polybutene, maleic anhydride grafted polyolefins such as Admer (available from Mitsui Chemicals) and Plexar (available from Quantum Chemicals), and copolymers of ethylene and vinyl acetate such as CXA (available from du Pont). The latter three polymers are particularly useful as adhesive layers to bond other polymeric layers together in the multilayer construction. A condition for the selection of the polymers to make up the alternating layers of the body is that the polymers selected have refractive indices which differ from each other by at least 0.03. Further, the polymers should be compatible in processing temperatures so that they may be readily coextruded. Polyetherimides, such as the ULTEM (trademark) resins available from the General Electric Company are especially useful where high temperatures may be encountered by the cold mirror and may be used either as a layer or substrate material. Other useful polymers include the KAMAX (trademark) resins (refractive index 1.54) available from Rohm and Haas which are copolymers of gluterimide and methyl methacrylate which also may be used either as a layer or substrate material.

It is preferred that the polymers selected have compatible rheologies for coextrusion. That is, a preferred method of forming polymeric cold mirror sheets for the present invention is the use of coextrusion techniques, so the melt viscosities of the polymers must be reasonably matched to prevent layer instability or nonuniformity. The polymers used also should have sufficient interfacial adhesion so that the films will not delaminate. Again, permanent or sacrificial skin layers may be used.

In another embodiment of the invention, elastomers may be used as the alternating polymeric materials. Use of elastomers may be used to impart a number of desirable properties to the cold mirror. For example, an elastomeric cold mirror may be deformed to create a variable focal length mirror. Additionally, reversibly stretching and/or relaxing an elastomeric mirror will move the peak reflectance characteristics of the mirror; the mirror may be "tuned" to reflect desired wavelengths by stretching or relaxing the elastomers. Suitable elastomers for use as alternating polymeric materials in the present invention are described in Schrenk et al., US-A-4,937,134. This patent refers to elastomeric polymers that have the properties of substantial transparency, elasticity, mismatch of refractive index, and processability to provide improved optical interference films. Suitable polyurethane elastomers include polytetramethylene glycol ether thermoplastic polyurethanes and polyadipate ester thermoplastic polyurethanes. Such thermoplastic polyurethanes are commercially available. A polymer pair which has been found to be effective are Pellethane (Trademark of The Dow Chemical Company) 2103-70A and Pellethane 2363-65D. Both are polytetramethylene glycol ether thermoplastic polyurethanes. The former has a refractive index of 1.51 while the latter has a refractive index of 1.57. Both have good transparency at typical film thicknesses used in the present invention. The refractive indices of the compositions may be modified by varying the ratio of hard (isocyanate) to soft (polyol) segments. Other elastomers may be used in combination with either of the above described polyurethanes. For example, polyether block amides available commercially from Atochem, Inc. under the trademark Pebax and flexible copolyesters available from Eastman Chemical Products, Inc. under the trademark Ecdel both possess the transparency, refractive index, rheological properties, and elasticity needed to function effectively in the present invention. The Pebax elastomeric polyether block amides consist of linear chains of rigid polyamide segments and flexible polyether segments represented by the formula:

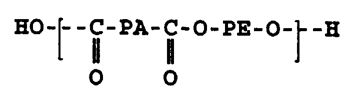

Suitable grades of the Pebax polyether block amides include the 4033, 3533, and 2533 series. The refractive indices of the series of compounds are 1.49, 1.48, and 1.49, respectively. The Ecdel PCCE copolyester has a refractive index of 1.52.A number of different combinations of these elastomers is suitable for use in the practice of the present invention. For example, multilayer films utilizing Pebax 2533 (refractive index 1.49) and Pellethane 2355-95AEF (a polyadipate ester thermoplastic polyurethane having a refractive index of 1.55) are a preferred combination. Such films have a refractive index mismatch of 0.06 and exhibit rapid recovery after stretching. Other suitable combinations include Pellethane 2103-70A and Pellethane 2363-75D with a refractive index mismatch of 0.07, Ecdel PCCE copolyester and Pellethane 2363-65D with a refractive index mismatch of 0.05, Ecdel PCCE and Pellethane 2363-75D with a refractive index mismatch of 0.06, and Pebax 2533 and Pellethane 2363-75D with a refractive index mismatch of 0.09.

Polymeric cold mirrors sheets for use in the present invention are most advantageously prepared by employing a method and a multilayered coextrusion device as described in US-A-3,773,882 and US-A-3,884,606. US-A-3,773,882 teaches a method for the preparation of a composite stream of interdigitated diverse synthetic resinous materials. The steps of the method are providing at least a first stream and a second stream of heat plastified extrudable thermoplastic material; dividing each of the streams into a plurality of first substreams and a plurality of second substreams, respectively; combining the substreams to form a composite stream having the first substreams and the second substreams interdigitated, with the further limitation that the substreams are combined at locations which are generally disposed on an arc of a circle; deforming the composite stream by causing the substreams thereof to flow in a generally radially inward manner to a discharge location generally disposed at the center of the circle; the discharge location being generally equidistant from locations of combination of adjacent first and second substreams; removing the composite stream from the discharge location; and deforming the stream into a generally sheet-like configuration wherein the interfaces between streams are generally parallel to the major surfaces of the sheet-like configuration. US-A-3,884,606 teaches an apparatus for the preparation of a multilayer film or sheet, the apparatus comprising a body, the body defining at least a first polymer entrance passage, a first plenum in communication with the first polymer passage, a stream dividing means to divide material flowing from the first passage into a plurality of first substreams, second polymer receiving means in operative communication with a second plenum, the second plenum discharging to the dividing means which divides the second stream into a plurality of second substreams and interdigitates the plurality of second substreams with the first substreams, the dividing means being in operative communication with a third or composite stream receiving plenum, the composite stream comprising the combined first and second substreams, a third plenum discharge passage in operative communication with the third plenum and adapted to receive the composite stream from the third plenum, the discharge means being in combination with a die having a generally slot-like extrusion orifice, the discharge passage having a first or receiving end and a second or discharge end, and the discharge portion of the stream dividing means being disposed in an arcuate manner to form an arc of a circle wherein the discharge portion is generally equidistant from the discharge end of the third plenum discharge passage. Such a device provides a method for preparing multilayered, simultaneously extruded thermoplastic materials, each of which are of a substantially uniform layer thickness. Preferably, a series of layer multiplying means as are described in US-A-3,759,647 may be employed. This patent describes an apparatus for the preparation of a composite synthetic resinous sheet-like article having in cooperative combination a means for providing at least two streams of heat plastified thermoplastic resinous material, a means for mechanically arranging the two streams into a composite stream having a plurality of generally parallel layers wherein a portion of one stream encapsulates the composite stream, a means for mechanically manipulating the composite stream to provide an increased number of layers in the manipulated stream, and a means for shaping the manipulated stream into a desired configuration having a plurality of layers generally parallel to a major surface of the desired configuration.

The feedblock of the coextrusion device receives streams of the diverse thermoplastic polymeric materials from a source such as a heat plastifying extruder. The streams of resinous materials are passed to a mechanical manipulating section within the feedblock. This section serves to rearrange the original streams into a multilayered stream having the number of layers desired in the final cold mirror. Optionally, the multilayered stream may be subsequently passed through a series of layer multiplying means in order to further increase the number of layers in the final cold mirror.

The multilayered stream is then passed into an extrusion die which is so constructed and arranged that streamlined flow is maintained therein. Such an extrusion device is described in US-A-3,557,265 which refers to a method of preparing such a sheet of thermoplastic resinous material by providing by extruding in an extrusion apparatus a plurality of closely adjacent flowing streams of diverse thermoplastic materials in a heat plastified condition in contiguous relationship to each other, each stream having generally planar surfaces which are generally parallel; altering the cross-sectional configuration of the plurality of flowing streams by reducing the dimension of the stream in a direction generally perpendicular to interfaces between the individual streams and increasing the dimension of the stream in a direction transverse to the direction of flow and generally parallel to the interface of the stream to form a sheet-like configuration having a plurality of layers wherein the layer interfaces are in generally parallel relationship to each other and to major surfaces of the sheet-like configuration. The resultant product is extruded to form a polymeric cold mirror sheet in which each layer is generally parallel to the major surface of adjacent layers.

The configuration of the extrusion die can vary and can be such as to reduce the thickness and dimensions of each of the layers. The precise degree of reduction in thickness of the layers delivered from the mechanical orienting section, the configuration of the die, and the amount of mechanical working of the mirror after extrusion are all factors which affect the thickness of the individual layers in the final cold mirror.

Layer thickness gradients may advantageously be introduced into the multilayer body by controlling the volume of heat plastified polymers passing through the feed ports of the coextrusion device as taught in Schrenk, US-A-3,687,589. Schrenk teaches an apparatus for the simultaneous extrusion of at least two diverse synthetic resinous materials into a layered composite body, the apparatus having a first heat plastified synthetic resinous material supply means adapted to deliver a first heat plastified stream, a second heat plastified synthetic resinous material supply means adapted to deliver a second heat plastified stream, a means to divide the first stream and a means to divide the second stream into a plurality of substreams, each means having an entrance and an exit, a means to recombine the substreams in a desired relationship into a composite layered stream, a means to deform the composite layered stream into a desired configuration, a stream shearing means for selectively applying a shearing force, by continual mechanical motion of a surface of said stream shearing means in contact with a stream, with the stream shearing means being at least one movable body positioned adjacent to, and in spaced relationship to the entrance of a dividing means. Alternatively, the layer thickness gradients may be introduced upstream of the interfacial surface generators by the use of adjustable valves to control the amount of heat plastified polymer introduced at the various feed slots to the ISG's. In yet another alternative method for introducing a layer thickness gradient into the multilayer polymeric body, a temperature gradient may be imposed on the feedblock to the co-extrusion device.

The cold mirrors of the present invention find application in a number of uses. For example, they may be used in medical and dental lighting applications where it is desirable to illuminate a subject without heating the surrounding area and/or where it is desirable to render the color projected by the lighting fixture true to daylight. Use of cold mirrors in theatrical lighting eliminates uncomfortable conditions for performers. Cold mirrors may also be used for different color masking effects.

In addition, use of a cold mirror which absorbs ultraviolet light may be used in art displays where it is desirable to protect works of art from degradation by ultraviolet light as well as from increased temperatures resulting from infrared light. Projectors and photocopy machines may also utilize polymeric cold mirrors to allow intense visible lighting with transmission of infrared light out of the apparatus. Polymeric cold mirrors may also be used in security applications as a lens which rejects visible light and allows infrared light to pass through so that areas may be illuminated with invisible light and viewed with an infrared sensitive camera.

Cold mirrors which reflect ultraviolet light may find use as lighting for agricultural purposes for plants which grow with visible and ultraviolet light. The solar infrared light can be separated by the cold mirror and used for another purpose such as for heating water.

Cold mirrors may also be used to produce solar energy by converting the sun's visible energy into electricity through photovoltaic cells while removing unnecessary infrared light to be used for an alternative operation. It is known that the presence of infrared light degrades the efficiency of photovoltaic cells, and the removal of infrared light will improve the efficiency of such cells.

Automotive lighting may also benefit from the use of cold mirrors in which visible light illuminates a roadway while infrared light is transmitted through the reflector to an open area of the car engine compartment where it can dissipate. Even general lighting applications can benefit from the use of the cold mirrors of the present invention as more compact and economical lighting fixtures may be utilized because of the heat dissipation capabilities of the mirrors.

In order that the invention may be more readily understood, reference is made to the following examples, which are intended to be illustrative of the invention, but are not intended to be limiting in scope.

A polymeric cold mirror sheet was produced using microlayer coextrusion equipment as described in US-A-3,773,882 and US-A-3,884,606. The polymeric cold mirror sheet comprised 400 alternating layers of polystyrene (Styron 685D, refractive index = 1.57) and polyethylene (Dow 12065, refractive index = 1.5). The mirror consisted of approximately equal volumetric compositions of polystyrene and polyethylene and was fabricated with a removable skin layer of polypropylene (Shell 5524) on both major surfaces. Extrusion temperatures were approximately 500°F (260°C), and the extruder pumping rates were as follows: 1) polyethylene: 20 lb/h (9 kg/h); 2) polystyrene: 20 lb/h (9 kg/h), and 3) polypropylene: 15 lb/h (6.8 kg/h). The layered melt stream was spread in a 16" (40 cm) wide coat hanger style die and cooled on a chill roll film unit before winding on the film roll. Final film thickness was 0.002" (0.05 mm) (core thickness) so that the first order reflectance peak was in the visible range. The film had a golden appearance when viewed in reflection.

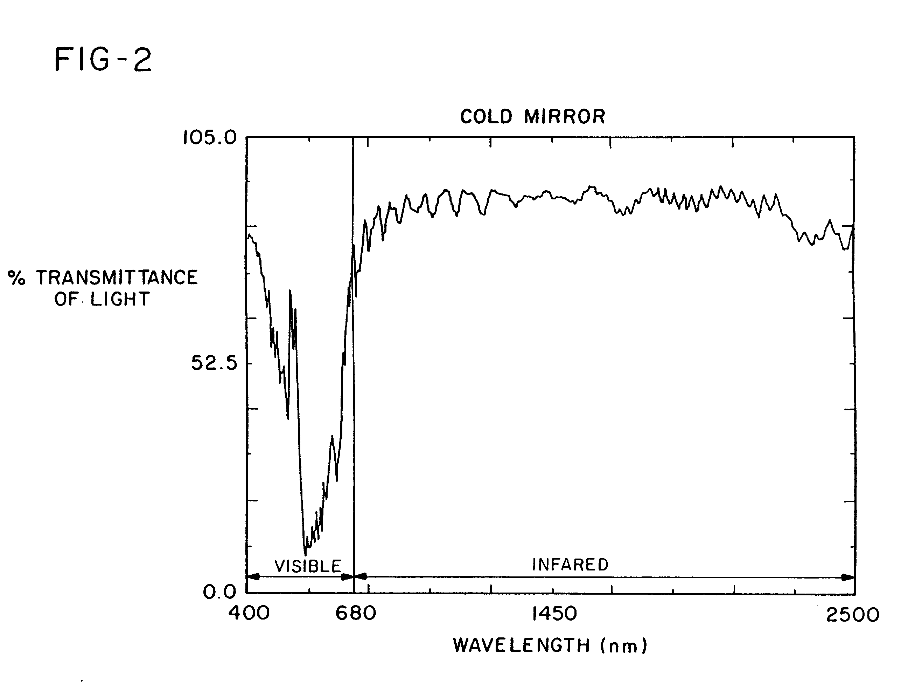

A transmission spectrum was run on the sample obtained from Example 1 using a Shimadzu spectro-photometer at a 0° angle of incidence. Fig. 2 depicts the results which indicated high broad band visible reflection (380 to 680 nm) and high transmission in the infrared region (680 to 2500 nm).

An experiment was conducted by placing the film between an infrared heat lamp (125 watt General Electric IR flood) and a type J thermocouple (blackened to facilitate absorption). The light source was positioned 6 inches (15.25 cm) away from the film, and the thermocouple was positioned 1.5 inches (3.75 cm) on the other side of the film so that the light source and thermocouple were a total of 7.5 inches (19 cm) apart. With no sample located between the light source and the thermocouple, the device registered 131°F (55°C). The placement of the film between the bulb and the thermocouple showed only a 2°F (1°C) drop in the initial measured temperature, indicating high infrared transmission and only cool visible reflection.

Placement of a polymeric reflective material fabricated in accordance with the teachings of Wheatley et al., US-A-5,122,905, which reflects in both the visible and infrared ranges between the lamp and thermocouple caused a 30°F (16.5°C) drop in temperature indicating that the sample was a poor infrared transmitter. The use of aluminum in the experiment dropped the temperature to nearly ambient (70°F; 21°C), indicating nearly no energy transmission.

A polymeric cold mirror sheet was produced using microlayer coextrusion equipment as described in US-A-3,773,882 and US-A-3,884,606. The polymeric cold mirror sheet comprised 2625 alternating layers of polycarbonate (CALIBRE 302-10, trademark of The Dow Chemical Company, 10 melt flow and refractive index = 1.586) and polymethyl methacrylate (Cyro Acrylite H15-003, trademark of Cyro Industries, refractive index = 1.49). A protective boundary layer of polycarbonate (CALIBRE 302-22, trademark of The Dow Chemical Company, 22 melt flow) and two outer skin layers on both major surfaces of polycarbonate (a 70/30 by volume blend, respectively, of CALIBRE 302-22, 22 melt flow, and an 80 melt flow polycarbonate commercially available from Taijin Chemicals) were also used to make the cold mirror sheet.

Extrusion rates were 44 lbs/h (20 kg/h) for polycarbonate in the microlayer core, 42 lbs/h (19 kg/h) for polymethyl methacrylate in the microlayer core, 10 lbs/h (4.5 kg/h) for polycarbonate in the protective boundary layer, and 15 lbs/h (6.8 kg/h) total for polycarbonate in the top and bottom outer skin layers. A 165 layer melt stream was produced using a semicircular half-moon feed block as described in the above mentioned patents. A layer thickness gradient was created in the layers by dividing the feed block into three different zones and maintaining the temperatures in those zones at 490° (255°C), 500° (260°C), and 470°F (245°C), respectively. Other extrusion equipment temperatures were maintained at 500°F (260°C).

Four interfacial surface generators (each doubling the number of layers) were used to multiply the 165 layers exiting the feed block to the 2625 layer structure. The 2625 layer melt stream was spread in a coat hanger style die and cooled on a chill roll film unit. The roll unit included three rolls operated in an "open" position meaning that the melt stream only touch the bottom and middle rolls in the stack and was not nipped. The bottom roll had a temperature of 265°F (130°C) and the middle roll had a temperature of 210°F (100°C). Roll take away speed was sufficient to result in a final film thickness of about 14.5 mil (0.37 mm).

These processing conditions resulted in an approximately 2:1 layer thickness gradient across the core microlayers. This broadened the reflectance peak to span the visible range, resulting in a substantially colorless, silvery appearance. Such a colorless, silvery appearance is not a requirement of the invention, but is desirable for some cold mirror applications. The average layer thickness for the core microlayers was approximately 110 nm with a repeating unit (AB) optical thickness of 340 nm.

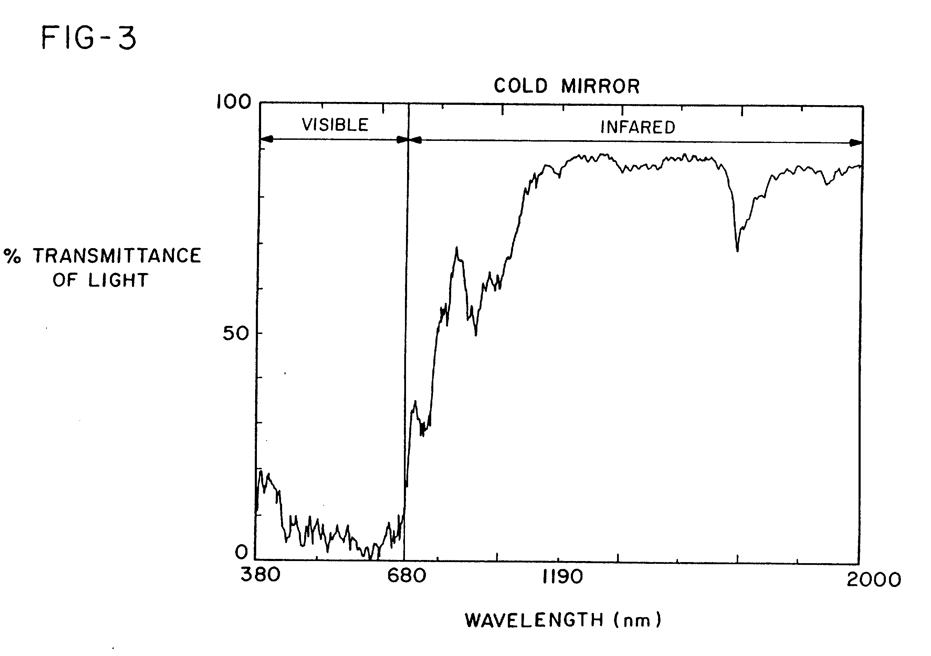

A transmission spectrum was run on the obtained 2625 layer sample. Because absorption of polycarbonate and polymethyl methacrylate in the range of 380 to 2000 nm is negligible, reflectance of the sample may be determined by the relation 1 - transmission. As shown by the spectrum in Fig. 3, the sample had an average of 94 percent reflectance across the visible range (380 to 680 nm) and an average transmission in the near infrared, 680 to 2000 nm, of from 80 to 90 percent.

While certain representative embodiments and details have been shown for purposes of illustrating the invention, it will be apparent to those skilled in the art that various changes in the methods and apparatus disclosed herein may be made without departing from the scope of the invention, which is defined in the appended claims.

## Claims

1. A cold mirror (30) comprising a multiplicity of all-polymeric mirror platelets (10;20) on a substrate (32), each platelet being formed of at least first and second refractive index diverse polymeric materials (A,B) with alternating layers (12,14) of said first and second polymeric materials (A,B) in repeating units in which the sum of the optical thicknesses in a substantial majority of said units is between 190 nm and 391 nm, there being a sufficient number of repeating units that at least 50 percent of peak reflecting visible light of a wavelength of between 380 to 680 nm incident on each of said platelets is reflected and at least 50 percent of infrared light between 680 to 2000 nm is transmitted or absorbed.

2. A cold mirror of Claim 1, wherein at least 50 percent of ultraviolet light between 300 to 380 nm incident on each of said platelets (10) is reflected.

3. A cold mirror of Claim 1, wherein at least 50 percent of ultraviolet light between 300 to 380 nm incident on each of said platelets (10) is absorbed.

4. A cold mirror of Claim 3, wherein one of said polymeric layers (12,14) includes an ultraviolet light absorbing dye or pigment.

5. A cold mirror of any one of the preceding claims, wherein the sum of the optical thicknesses in a substantial majority of the repeating units is between 190 nm to 340 nm, and wherein said polymeric materials (A,B) differ from each other in refractive index (n₁,n₂) by at least 0.03 in the wavelength range of from 380 to 680 nm.

6. A cold mirror of any one of the preceding claims, wherein each of said platelets (10) comprises at least 200 layers.

7. A cold mirror of any one of the preceding claims, wherein at least 80 percent of peak reflecting visible light of a wavelength of between 380 to 680 nm incident on each of said platelets (10) is reflected.

8. A cold mirror of any one of the preceding claims, wherein at least 80 percent of infrared light between 680 to 2000 nm incident on each of said platelets (10) is transmitted.

9. A cold mirror of any one of Claims 1 to 8, in which said mirror is formed from a coatable composition (26) from a multiplicity of said mirror platelets (20) in a liquid dispersion (22).

10. A cold mirror of any one of Claims 1 to 8, in which said mirror comprises a multiplicity of mirror platelets (20) embossed into the surface of the substrate (32).

11. A cold mirror of any one of Claims 1 to 8, in which said mirror comprises a multiplicity of mirror platelets (20) on the surface of an adhesive substrate.

12. A cold mirror of Claim 11, in which said mirror comprises a multiplicity of said mirror platelets (20) on the surface of the substrate and wherein a transparent sheet is laminated over said mirror platelets.

13. A coatable composition (26) for application to a substrate (32) to form a cold mirror (30) according to Claim 9, said composition comprising a multiplicity of all-polymeric mirror platelets (20) in a liquid dispersion (22), each of the platelets having the features of the platelets defined in Claim 1.

14. A composition as claimed in Claim 13, wherein said platelets have the features of the platelets defined in any one of Claims 2 to 8.

## Patentansprüche

1. Kaltlichtspiegel (30), umfassend eine Vielzahl von ausschließlich polymeren Spiegelplättchen (10, 20) auf einem Substrat (32), wobei jedes Plättchen aus mindestens einem ersten und einem zweiten polymeren Material (A, B) mit einem unterschiedlichen Brechungsindex gebildet wird, mit abwechselnden Schichten (12, 14) aus dem ersten und dem zweiten polymeren Material (A, B) in wiederkehrenden Einheiten, wobei die Summe der optischen Dicken im Großteil dieser Einheiten zwischen 190 nm und 391 nm liegt, wobei eine ausreichende Anzahl wiederkehrender Einheiten vorliegt, so daß mindestens 50 % des einen Peak reflektierenden sichtbaren Lichts einer Wellenlänge von 380 bis 680 nm, das auf jedes der Plättchen fällt, reflektiert werden und mindestens 50 % des Infrarotlicht zwischen 680 und 2000 nm durchgelassen oder absorbiert wird.

2. Kaltlichtspiegel nach Anspruch 1, bei dem mindestens 50 % des UV-Lichts zwischen 300 und 380 nm, das auf jedes der Plättchen (10) fällt, reflektiert werden.

3. Kaltlichtspiegel nach Anspruch 1, bei dem mindestens 50 % des UV-Lichts zwischen 300 und 380 nm, das auf jedes der Plättchen (10) fällt, absorbiert werden.

4. Kaltlichtspiegel nach Anspruch 3, bei dem eine der polymeren Schichten (12, 14) einen UV-Licht absorbierenden Farbstoff bzw. ein UV-Licht absorbierendes Pigment umfaßt.

5. Kaltlichtspiegel nach einem der vorstehenden Ansprüche, bei dem die Summe der optischen Dicken im Großteil der wiederkehrenden Einheiten zwischen 190 und 340 nm liegt und bei dem sich die polymeren Materialien (A, B) im Brechungsindex (n₁, n₂) um mindestens 0,03 im Wellenlängenbereich von 380 bis 680 nm voneinander unterscheiden.

6. Kaltlichtspiegel nach einem der vorstehenden Ansprüche, bei dem jedes der Plättchen (10) mindestens 200 Schichten umfaßt.

7. Kaltlichtspiegel nach einem der vorstehenden Ansprüche, bei dem mindestens 80 % des einen Peak reflektierenden sichtbaren Lichts einer Wellenlänge zwischen 380 und 680 nm, das auf jedes der Plättchen (10) fällt, reflektiert werden.

8. Kaltlichtspiegel nach einem der vorstehenden Ansprüche, bei dem mindestens 80 % des Infrarotlichts einer Wellenlänge zwischen 680 und 2000 nm, das auf jedes der Plättchen (10) fällt, durchgelassen werden.

9. Kaltlichtspiegel nach einem der Ansprüche 1 bis 8, der aus einer beschichtbaren Zusammensetzung (26) aus einer Vielzahl der Spiegelplättchen (20) in einer flüssigen Dispersion (22) gebildet wird.

10. Kaltlichtspiegel nach einem der Ansprüche 1 bis 8, der eine Vielzahl von in die Oberfläche des Substrats (32) geprägten Spiegelplättchen (20) aufweist.

11. Kaltlichtspiegel nach einem der Ansprüche 1 bis 8, der eine Vielzahl von Spiegelplättchen (20) auf der Oberfläche eines haftenden Substrats umfaßt.

12. Kaltlichtspiegel nach Anspruch 11, der eine Vielzahl von Spiegelplättchen (20) auf der Oberfläche des Substrats umfaßt und in dem eine transparente Bahn über die Spiegelplättchen laminiert ist.

13. Beschichtbare Zusammensetzung (26) zum Aufbringen auf ein Substrat (32) zur Herstellung eines Kaltlichtspiegels (30) nach Anspruch 9, welcher eine Vielzahl von ausschließlich polymeren Spiegelplättchen (20) in einer flüssigen Dispersion (22) umfaßt, wobei jedes der Plättchen die Merkmale der in Anspruch 1 definierten Plättchen aufweist.

14. Zusammensetzung nach Anspruch 13, in der die Plättchen die Merkmale der in einem der Ansprüche 2 bis 8 definierten Plättchen aufweisen.

## Revendications

1. Un miroir à lumière froide (30) comportant une multiplicité de plaquettes tout-polymère de type miroir (10 ; 20) sur un substrat (32), chaque plaquette étant formée d'au moins un premier et un second matériaux polymères de différents indices de réfraction (A, B) avec des couches alternées (12, 14) desdits premier et second matériaux polymères (A, B) dans des motifs répétitifs dans lesquels la somme des épaisseurs optiques dans une majorité essentielle desdits motifs se situe entre 190 nm et 391 nm, en prévoyant un nombre suffisant de motifs répétitifs de façon qu'au moins 50 % de lumière visible en réflexion maximale d'une longueur d'onde se situant entre 380 et 680 nm, incidente sur chacune desdites plaquettes est réfléchie et au moins de 50 % de lumière infrarouge entre 680 et 2.000 nm est transmise ou absorbée.

2. Un miroir à lumière froide selon la revendication 1, dans lequel au moins 50 % de lumière ultraviolette entre 300 et 380 nm, incidente sur chacune desdites plaquettes (10) est réfléchie.

3. Un miroir à lumière froide de la revendication 1, dans lequel au moins 50 % de la lumière ultraviolette entre 300 et 380 nm, incidente sur chacune desdites plaquettes (10) est absorbée.

4. Un miroir à lumière froide de la revendication 3, dans lequel l'une desdites couches polymères (12, 14) comporte un colorant ou un pigment absorbant la lumière ultraviolette.

5. Un miroir à lumière froide de l'une quelconque des revendications précédentes, dans lequel la somme des épaisseurs optiques dans une majorité essentielle desdits motifs répétitifs peut se situer entre 190 nm et 340 nm, et dans lequel lesdits matériaux polymères (A, B) diffèrent l'un de l'autre d'un indice de réfraction (n₁, n₂) d'au moins 0,03 dans le domaine de longueur d'onde de 380 à 680 nm.

6. Miroir à lumière froide de l'une quelconque des revendications précédentes, dans lequel chacune desdites plaquettes (10) comporte au moins 200 couches.

7. Un miroir à lumière froide de l'une quelconque des revendications précédentes, dans lequel au moins 80 % de la lumière visible de réflexion maximal d'une longueur d'onde se situant entre 380 et 680 nm, incidente sur chacune desdites plaquettes (10) est réfléchie.

8. Un miroir à lumière froide de l'une quelconque des revendications précédentes, dans lequel au moins 80 % de la lumière infrarouge entre 680 et 2.000 nm, incidente sur chacune desdites plaquettes (10) est transmise.

9. Un miroir à lumière froide de l'une quelconque des revendications 1 à 8, dans lequel ledit miroir est formé à partir d'une composition susceptible d'être appliquée en revêtement (26) d'une multiplicité desdites plaquettes de type miroir (20) dans une dispersion liquide (22).

10. Un miroir à lumière froide de l'une quelconque des revendications 1 à 8, dans lequel ledit miroir comprend une multiplicité de plaquettes de type miroir (20), encastrée dans la surface du substrat (32).

11. Un miroir à lumière froide de l'une quelconque des revendications 1 à 8, dans lequel ledit miroir comporte une multiplicité de plaquettes de type miroir (20) sur la surface d'un substrat adhésif.

12. Un miroir à lumière froide de la revendication 11, dans lequel ledit miroir comprend une multiplicité desdites plaquettes de type miroir (20) sur la surface du substrat et dans lequel une feuille transparente est laminée sur lesdites plaquettes de type miroir.

13. Une composition susceptible d'être appliquée en revêtement (26), destinée à être appliquée sur un substrat (32) pour former un miroir à lumière froide (30) selon la revendication 9, ladite composition comportant toute une multiplicité de plaquettes tout-polymère de type miroir (20) dans une dispersion liquide (22), chacune des plaquettes ayant des caractéristiques des plaquettes définies dans la revendication 1.

14. Une composition telle que revendiquée dans la revendication 11, dans laquelle lesdites plaquettes ont les caractéristiques des plaquettes définies dans l'une quelconque des revendications 2 à 8.
